# FASCICULE DE BREVET EUROPEEN

(11) **EP 3 494 160 B1**
(45) Date de publication et mention de la délivrance du brevet: **02.03.2022**
(21) Numéro de dépôt: 17765219.5
(22) Date de dépôt: 02.08.2017
(51) Int. Cl.: C08G 63/672, B29C 49/08

(54) **POLYESTER THERMOPLASTIQUE SEMI-CRISTALLIN POUR LA FABRICATION DE CORPS CREUX BI-ETIRES**
HALBKRISTALLINES THERMOPLASTISCHES POLYESTER ZUR HERSTELLUNG VON BIAXIAL GESTRECKTEN HOHLKÖRPERN
SEMI-CRYSTALLINE THERMOPLASTIC POLYESTER FOR PRODUCING BIAXIALLY STRETCHED HOLLOW BODIES

(30) Priorité: 02.08.2016 FR 1657491
(43) Date de publication de la demande: 12.06.2019
(73) Titulaire: Roquette Frères, 62136 Lestrem (FR)
(72) Inventeur: AMEDRO, Hélène, 62400 Bethune (FR); SAINT-LOUP, René, 59160 Lomme (FR)
(74) Mandataire: Plasseraud IP
(86) Numéro de dépôt international: PCT/FR2017/052169
(87) Numéro de publication internationale: WO 2018/024988

(56) Documents cités:
- WO-A1-2015/022254
- US-A1- 2012 177 854
- US-A1- 2015 165 668

## Description

### Domaine de l'invention

La présente invention se rapporte à l'utilisation d'un polyester thermoplastique semi-cristallin comprenant au moins un motif 1,4 : 3,6-dianhydrohexitol pour la fabrication de corps creux bi-étirés.

### Arrière-plan technologique de l'invention

Les matières plastiques sont devenues incontournables pour la fabrication en série d'objets. En effet, leur caractère thermoplastique permet à ces matières d'être transformées à cadence élevée en toutes sortes d'objets.

Certains polyesters aromatiques thermoplastiques ont des propriétés thermiques leur permettant d'être utilisés directement pour la fabrication de matériaux. Ils comprennent des motifs diol aliphatique et diacide aromatique. Parmi ces polyesters aromatiques, on peut citer le polyéthylène téréphtalate (PET), qui est un polyester comprenant des motifs éthylène glycol et acide téréphtalique, servant par exemple à la fabrication de films.

Toutefois, pour certaines applications ou dans certaines conditions d'utilisation, il est nécessaire d'améliorer certaines propriétés et notamment la résistance au choc ou encore de tenue thermique. C'est ainsi que des PET modifiés glycol (PETg) ont été développés. Ce sont généralement des polyesters comprenant, en plus des motifs éthylène glycol et acide téréphtalique, des motifs cyclohexanediméthanol (CHDM). L'introduction de ce diol dans le PET lui permet d'adapter les propriétés à l'application visée, par exemple d'améliorer sa résistance au choc ou ses propriétés optiques.

D'autres PET modifiés ont également été développés en introduisant dans le polyester des motifs 1,4 : 3,6-dianhydrohexitol, notamment de l'isosorbide (PEIT). Ces polyesters modifiés présentent des températures de transition vitreuse plus élevées que les PET non modifiés ou les PETg comprenant du CHDM. En outre, les 1,4 : 3,6-dianhydrohexitols présentent l'avantage de pouvoir être obtenus à partir de ressources renouvelables telles que l'amidon.

Le document WO 2015/022254 décrit une préforme plastique apte à subir un processus d'étirage-soufflage ou d'injection-soufflage de manière à obtenir un contenant d'aérosol. La préforme est faite d'un matériau plastique comprenant un copolyester ayant au moins 1 % d'isosorbide et ayant une viscosité intrinsèque de 0,7 dL/g (page 5, lignes 5 à 8). De préférence, le copolyester comprenant de l'isosorbide comprend également un motif téréphtaloyle et optionnellement un ou plusieurs autre motif acide diaromatique, motif éthylène glycol ou autres motifs diols (page 10, lignes 23-26). Concernant les exemples de réalisation, le premier essai (ref A) décrit des contenants d'aérosol fabriqués à partir de PEIT (poly(éthylène-co-isosorbide)téréphtalalte), ledit PEIT comprenant 5,8 moles % d'isosorbide.

Un autre problème de ces PEIT est qu'ils peuvent présenter des propriétés insuffisantes de résistance au choc. De plus, la température de transition vitreuse peut être insuffisante pour la fabrication de certains objets plastiques.

Pour améliorer les propriétés de résistance au choc des polyesters, il est connu de l'art antérieur d'utiliser des polyesters dont on a réduit la cristallinité. En ce qui concerne les polyesters à base d'isosorbide, on peut citer la demande US2012/0177854 qui décrit des polyesters comprenant des motifs acide téréphtalique et des motifs diols comprenant de 1 à 60% en moles d'isosorbide et de 5 à 99% de 1,4-cyclohexanediméthanol qui présentent des propriétés de résistance à l'impact améliorées. Comme indiqué dans la partie introductive de cette demande, il s'agit d'obtenir des polymères dont on élimine la cristallinité par l'ajout de comonomères, et donc ici par l'ajout de 1,4-cyclohexanediméthanol. Dans la partie exemples est décrite la fabrication de différents poly(ethylène-co-1,4-cyclohexanediméthylène-co-isosorbide) téréphtalates (PECIT) ainsi qu'également un exemple de poly(1,4-cyclohexanediméthylène-co-isosorbide) téréphtalate (PCIT).

On peut également noter que, tandis que les polymères de type PECIT ont fait l'objet de développements commerciaux, ce n'est pas le cas des PCIT. En effet leur fabrication était jusqu'ici considérée comme complexe, l'isosorbide présentant une faible réactivité comme diol secondaire. Yoon et al. (Synthesis and Characteristics of a Biobased High-Tg Terpolyester of Isosorbide, Ethylene Glycol, and 1,4-Cyclohexane Dimethanol: Effect of Ethylene Glycol as a Chain Linker on Polymerization, Macromolecules, 2013, 46, 7219-7231*)* ont ainsi montré que la synthèse de PCIT est bien plus difficile à réaliser que celle de PECIT. Ce document décrit l'étude de l'influence du taux d'éthylène glycol sur la cinétique de fabrication de PECIT.

Dans *Yoon et al*., un PCIT amorphe (qui comprend par rapport à la somme des diols environ 29% d'isosorbide et 71% de CHDM), est fabriqué afin de comparer sa synthèse et ses propriétés avec celles des polymères de type PECIT. L'utilisation de températures élevées lors de la synthèse induit une dégradation thermique du polymère formé si on se réfère au premier paragraphe de la partie *Synthesis* de la page 7222, cette dégradation étant notamment liée à la présence des diols aliphatiques cycliques tels que l'isosorbide. De ce fait, *Yoon et al*. ont utilisé un procédé dans lequel la température de polycondensation est limitée à 270°C. Yoon et al. ont constaté que, même en augmentant le temps de polymérisation, le procédé ne permet pas non plus d'obtenir un polyester présentant une viscosité suffisante. Ainsi, sans ajout d'éthylène glycol, la viscosité du polyester reste limitée, ceci malgré l'utilisation de temps de synthèse prolongés.

Ainsi, malgré les modifications apportées aux PET, il existe toujours un besoin constant de nouveaux polyesters présentant des propriétés améliorées.

Dans le domaine des matières plastiques, et notamment pour la fabrication de corps creux, il est nécessaire de disposer de polyester thermoplastique semi-cristallin aux propriétés améliorées, notamment ayant une température de transition vitreuse élevée, qui permettent *in fine* un remplissage à chaud à des températures élevées.

On connait du document US6126992 des objets fabriqués à partir de polymères ayant des motifs acide téréphtalique, des motifs éthylène glycol et des motifs isosorbide et éventuellement un autre diol (par exemple le 1,4-cyclohexanediméthanol). L'ensemble des polymères obtenus présentent ainsi des motifs éthylène glycol car il est largement admis que ces derniers sont nécessaires à l'incorporation de l'isosorbide et à l'obtention d'une température de transition vitreuse élevée.

Le document US6063465 décrit des récipients en polyester fabriqués à partir d'un polymère ayant des motifs isosorbide, des motifs acide téréphtalique, et des motifs éthylène glycol. Les récipients ainsi fabriqués sont adaptés pour contenir des liquides aussi bien que des solides. Les exemples 1 et 2 présentent la synthèse de polyester à base de diméthyle téréphtalate, d'isosorbide et d'éthylène glycol. Le polymère obtenu selon l'exemple 2 est préparé de la même manière que celui de l'exemple 1 mais présente un taux d'isosorbide supérieur.

Cependant, les récipients fabriqués à partir de ces polymères présentent, lorsqu'ils sont remplis à une température allant jusqu'à 92°C, un rétrécissement de l'ordre de 1 à 10%, voire pire, se déforment à une température de 95 °C comme cela est le cas pour le polymère présentant un taux supérieur d'isosorbide (Exemple 2).

Ainsi, il existe encore à ce jour le besoin de disposer de polyesters thermoplastiques contenant des motifs 1,4 : 3,6-dianhydrohexitol pour la fabrication de corps creux, lesdits polyesters ayant donc des propriétés mécaniques améliorées, pouvant être facilement mis en forme, et présentant une résistance thermique permettant le remplissage à chaud avec des températures élevées.

Il est donc du mérite de la Demanderesse d'avoir trouvé que cet objectif pouvait être atteint, contre toute attente, avec un polyester thermoplastique semi-cristallin à base d'isosorbide ne présentant pas d'éthylène glycol alors qu'il était connu jusqu'à présent que ce dernier était indispensable pour l'incorporation dudit l'isosorbide. En effet, le polyester thermoplastique semi-cristallin utilisé selon la présente invention, grâce à une viscosité et un ratio en motif particuliers, présente des propriétés améliorées pour une utilisation selon l'invention dans la fabrication de corps creux bi-étirés.

### Résumé de l'invention

L'invention a ainsi pour objet l'utilisation d'un polyester thermoplastique semi-cristallin pour la fabrication de corps creux bi-étirés, ledit polyester comprenant :
- au moins un motif 1,4 : 3,6-dianhydrohexitol (A) ;
- au moins un motif diol alicyclique (B) autre que les motifs 1,4 : 3,6-dianhydrohexitol (A) ;
- au moins un motif acide téréphtalique (C) ;
dans lequel le ratio molaire (A)/[(A)+(B)] étant d'au moins 0,1 et d'au plus 0,30,
ledit polyester étant exempt de motifs diol aliphatique non cyclique et dont la viscosité réduite en solution (25°C ; phénol (50%m) : ortho-dichlorobenzène (50%m) ; 5 g/L de polyester) est supérieure à 50 mL/g.

Ces polyesters possèdent des propriétés thermiques et mécaniques améliorées et notamment une bonne tenue thermique du fait d'une température de transition vitreuse élevée, ce qui est particulièrement intéressant pour la fabrication de corps creux bi-étirés. En effet, les corps creux bi-étirés fabriqués à partir desdits polyester peuvent notamment être remplis à chaud à des températures allant jusqu'à 105°C.

Un second objet de l'invention concerne un procédé de fabrication d'un corps creux bi-étiré à base du polyester thermoplastique semi-cristallin décrit ci-dessus.

Enfin, un troisième objet de l'invention concerne un corps creux bi-étirés comprenant le polyester thermoplastique semi-cristallin tel que précédemment décrit.

### Description détaillée de l'invention

L'invention a ainsi pour objet l'utilisation d'un polyester thermoplastique semi-cristallin pour la fabrication de corps creux bi-étirés, ledit polyester comprenant :
- au moins un motif 1,4 : 3,6-dianhydrohexitol (A) ;
- au moins un motif diol alicyclique (B) autre que les motifs 1,4 : 3,6-dianhydrohexitol (A) ;
- au moins un motif acide téréphtalique (C) ;
dans lequel le ratio molaire (A)/[(A)+(B)] étant d'au moins 0,1 et d'au plus 0,30 et la viscosité réduite en solution supérieure à 50 mL/g.

Le polyester thermoplastique semi-cristallin est exempt de motifs diol aliphatiques non cycliques ou en comprend une faible quantité.

Selon l'invention, ces motifs pouvant être identiques ou différents, par rapport à la totalité des motifs monomériques du polyester.

Par « ratio molaire (A)/[(A)+(B)] » on entend le ratio molaire motifs 1,4 : 3,6-dianhydrohexitol (A) / somme des motifs 1,4 : 3,6-dianhydrohexitol (A) et des motifs diols alicycliques (B) autre que les motifs 1,4 : 3,6-dianhydrohexitol (A).

Un diol aliphatique non cyclique peut être un diol aliphatique non cyclique linéaire ou ramifié. Il peut également être un diol aliphatique non cyclique saturé ou insaturé. Outre l'éthylène glycol, le diol aliphatique non cyclique linéaire saturé peut par exemple être le 1,3-propanediol, le 1,4-butanediol, le 1,5-pentanediol, le 1,6-hexanediol, le 1,8-octanediol et/ou le 1,10-decanediol. Comme exemple de diol aliphatique non cyclique ramifié saturé, on peut citer le 2-methyl-1,3-propanediol, le 2,2,4-trimethyl-1,3-pentanediol, le 2-ethyl-2-butyl-1,3-propanediol, le propylèneglycol et/ou le néopentylglycol. Comme exemple de diol aliphatique insaturé, on peut citer par exemple le cis-2-butene-1,4-diol.

De préférence, le polyester est exempt de motif diol aliphatique non cyclique et plus préférentiellement, il est exempt d'éthylène glycol.

Malgré l'absence de diol aliphatique non cyclique, et donc l'absence d'éthylène glycol, utilisé pour la synthèse, il est obtenu de manière surprenante un polyester thermoplastique semi-cristallin présentant une viscosité réduite en solution élevée et dans lequel l'isosorbide est particulièrement bien incorporé. Sans être lié par une quelconque théorie, ceci s'expliquerait par le fait que la cinétique de réaction de l'éthylène glycol est beaucoup plus élevée que celle du 1,4 : 3,6-dianhydrohexitol ce qui limite fortement l'intégration de ce dernier dans le polyester. Les polyesters en résultant présentent donc un faible taux d'intégration de 1,4 : 3,6-dianhydrohexitol et par conséquent une température de transition vitreuse relativement basse.

Le monomère (A) est un 1,4 : 3,6-dianhydrohexitol peut être l'isosorbide, l'isomannide, l'isoidide, ou un de leurs mélanges. De préférence, le 1,4 : 3,6-dianhydrohexitol (A) est l'isosorbide.

L'isosorbide, l'isomannide et l'isoidide peuvent être obtenus respectivement par déshydratation de sorbitol, de mannitol et d'iditol. En ce qui concerne l'isosorbide, il est commercialisé par la Demanderesse sous le nom de marque POLYSORB^{®} P.

Le diol alicyclique (B) est également appelé diol aliphatique et cyclique. Il s'agit d'un diol qui peut notamment être choisi parmi le 1,4-cyclohexanedimethanol, le 1,2-cyclohexanedimethanol, le 1,3-cyclohexanedimethanol ou un mélange de ces diols. D'une manière préférentielle, le diol alicyclique (B) est le 1,4-cyclohexanedimethanol.

Le diol alicyclique (B) peut être dans la configuration *cis,* dans la configuration *trans* ou peut être un mélange de diols en configuration *cis* et *trans.*

Le ratio molaire motifs 1,4 : 3,6-dianhydrohexitol (A) / somme des motifs 1,4 : 3,6-dianhydrohexitol (A) et des motifs diols alicycliques (B) autre que les motifs 1,4 : 3,6-dianhydrohexitol (A), soit (A)/[(A)+(B)], est avantageusement d'au moins 0,1 et d'au plus 0,28, et tout particulièrement ce ratio est d'au moins 0,15 et d'au plus 0,25.

Un polyester thermoplastique semi-cristallin particulièrement adapté pour la fabrication de corps creux bi-étirés comprend:
- une quantité molaire de motifs 1,4 : 3,6-dianhydrohexitol (A) allant de 2,5 à 14 % mol ;
- une quantité molaire de motifs diol alicyclique (B) autre que les motifs 1,4 : 3,6-dianhydrohexitol (A) allant de 31 à 42,5 % mol ;
- une quantité molaire de motifs acide téréphtalique (C) allant de 45 à 55 % mol.

Les quantités en différents motifs dans le polyester peuvent être déterminées par RMN 1H ou par analyse chromatographique du mélange de monomères issus d'une méthanolyse ou d'une hydrolyse complète du polyester, de préférence par RMN 1H.

L'homme de l'art peut aisément trouver les conditions d'analyse pour déterminer les quantités en chacun des motifs du polyester. Par exemple, à partir d'un spectre RMN d'un poly(1,4-cyclohexanedimethylène-co-isosorbide téréphtalate), les déplacements chimiques relatifs au 1,4-cyclohexanedimethanol sont compris entre 0,9 et 2,4 ppm et 4,0 et 4,5 ppm, les déplacements chimiques relatifs au cycle téréphtalate sont compris entre 7,8 et 8,4 ppm et les déplacements chimiques relatifs à l'isosorbide sont compris entre 4,1 et 5,8 ppm. L'intégration de chaque signal permet de déterminer la quantité de chaque motif du polyester.

Les polyesters thermoplastiques semi-cristallins utilisés selon l'invention présentent une température de fusion allant de 210 à 295°C, par exemple de 240 à 285 °C.

De plus, les polyesters thermoplastiques semi-cristallins présentent une température de transition vitreuse allant de 85 à 120°C, par exemple de 90 à 115°C.

Les températures de transition vitreuse et de fusion sont mesurées par les méthodes classiques, notamment en utilisant la calorimétrie différentielle à balayage (DSC) en utilisant une vitesse de chauffe de 10°C/min. Le protocole expérimental est détaillé dans la partie exemples ci-après.

Avantageusement, le polyester thermoplastique semi-cristallin présente une chaleur de fusion supérieure à 10 J/g, de préférence supérieure à 20 J/g, la mesure de cette chaleur de fusion consistant à faire subir à un échantillon de ce polyester un traitement thermique à 170°C pendant 16 heures puis à évaluer la chaleur de fusion par DSC en chauffant l'échantillon à 10°C/min.

Le polyester thermoplastique semi-cristallin utilisé selon l'invention présente notamment une clarté L* supérieure à 40. Avantageusement, la clarté L* est supérieure à 55, de préférence supérieure à 60, tout préférentiellement supérieure à 65, par exemple supérieure à 70. Le paramètre L* peut être déterminé à l'aide d'un spectrophotomètre, en utilisant le modèle CIE Lab.

Enfin, la viscosité réduite en solution dudit polyester thermoplastique semi-cristallin est supérieure à 50 mL/g et de préférence inférieure à 120 mL/g, cette viscosité pouvant être mesurée à l'aide d'un viscosimètre capillaire Ubbelohde à 25°C dans un mélange équimassique de phénol et d'ortho-dichlorobenzène après dissolution du polymère à 130°C sous agitation, la concentration de polymère introduit étant de 5g/L.

Ce test de mesure de viscosité réduite en solution est, de par le choix des solvants et de la concentration des polymères utilisés, parfaitement adapté pour déterminer la viscosité du polymère visqueux préparé selon le procédé décrit ci-après.

Le caractère semi-cristallin des polyesters thermoplastiques utilisés selon la présente invention se caractérise lorsque que ces derniers, après un traitement thermique de 16h à 170°C, présentent des raies de diffraction aux rayons X ou un pic de fusion endothermique en Analyse Calorimétrique Différentielle à Balayage (DSC).

Le polyester thermoplastique semi-cristallin tel que précédemment défini présente bien des avantages pour la fabrication de corps creux bi-étirés.

En effet, grâce notamment au ratio molaire motifs 1,4 : 3,6-dianhydrohexitol (A) / somme des motifs 1,4 : 3,6-dianhydrohexitol (A) et des motifs diols alicycliques (B) autre que les motifs 1,4 : 3,6-dianhydrohexitol (A) d'au moins 0,1 et d'au plus 0,30 et à une viscosité réduite en solution supérieure à 50 mL/g et de préférence inférieure à 120 mL/g, les polyesters thermoplastiques semi-cristallin ont une meilleure tenue thermique ce qui permet aux corps creux fabriqués à partir de ces derniers de pouvoir être notamment remplis à chaud à des températures allant jusqu'à 95°C voir même jusqu'à 105°C sans se déformer et sans fuir.

Un corps creux bi-étiré au sens de la présente invention est un corps creux essentiellement constitué de plastique et peut être par exemple une bouteille, un flacon, un bidon, un fût ou encore un réservoir. De préférence le corps creux est une bouteille.

Les corps creux bi-étirés selon l'invention peuvent être directement fabriqués à partir de l'état fondu après polymérisation du polyester thermoplastique semi-cristallin.

Selon une alternative, le polyester thermoplastique semi-cristallin peut être conditionné sous une forme facilement manipulable telle que des pellets ou des granulés avant d'être utilisé pour la fabrication de corps creux. D'une manière préférentielle, le polyester thermoplastique semi-cristallin est conditionné sous forme de granulés, lesdits granulés étant avantageusement séchés avant la transformation sous forme de corps creux. Le séchage est réalisé de manière à obtenir des granulés présentant un taux d'humidité résiduelle inférieur à 300 ppm, préférentiellement inférieur à 200 ppm comme par exemple environ 134 ppm.

La fabrication de corps creux bi-étirés peut se faire par les techniques connues de l'homme du métier comme par exemple l'extrusion-soufflage avec bi-étirage ou l'injection-soufflage.

De préférence la fabrication est réalisée par injection-soufflage. Selon cette méthode, le polyester thermoplastique semi-cristallin est injecté pour former une préforme. Le col de la préforme possède déjà sa forme définitive et constitue la partie qui sert à maintenir le futur corps creux pendant l'opération de soufflage. Si nécessaire, la préforme est réchauffée et enfermée dans un moule de soufflage ayant la forme désirée. Le moule peut être formé de deux demi-coquilles présentant des empreintes sur la face intérieure permettant de donner au futur corps creux des aspects de surface particuliers.

Lorsque la préforme est introduite dans le moule, une canne d'étirage vient étirer la matière axialement, et l'on effectue un pré-soufflage à quelques bars de pression. Le soufflage final est effectué par injection d'air comprimé. Ainsi, les chaînes polymères sont orientées à la fois selon un axe longitudinal du futur corps creux et à la fois radialement et le polyester se refroidit au contact du moule ce qui fige le corps creux dans sa forme finale. Cette bi-orientation permet d'obtenir des corps creux bi-orientés aux propriétés mécaniques améliorées.

La forme et le volume du corps creux bi-étiré fabriqué sont fonctions des caractéristiques du moule utilisé pour le soufflage. Concernant le volume, il peut varier de quelques cm³ à quelques dm³, notamment de 50 cm³ à 5000 cm³ et de préférence de 100 cm³ à 2500 cm³ et encore plus particulièrement de 500 cm³ à 2000 cm³, comme par exemple 1500 cm³.

Selon un mode de réalisation particulier, le polyester thermoplastique semi-cristallin précédemment défini est utilisé en combinaison avec un ou plusieurs polymère additionnel pour la fabrication de corps creux bi-étirés.

Le polymère additionnel peut être choisi parmi les polyamides, les polyesters autres que le polyester selon l'invention, le polystyrène, les copolymères de styrène, les copolymères styrène-acrylonitrile, les copolymères styrène-acrylonitrile-butadiène, les polyméthacrylates de méthyle, les copolymères acryliques, les poly(éther-imides), les polyoxyde de phénylène tels que le polyoxyde de (2,6-diméthylphenylène), les polysulfate de phénylène, les poly (ester-carbonates), les polycarbonates, les polysulfones, les polysulfone ethers, les polyéther cétone et les mélanges de ces polymères.

Le polymère additionnel peut également être un polymère permettant d'améliorer les propriétés au choc du polymère, notamment les polyoléfines fonctionnelles telles que les polymères et copolymères d'éthylène ou de propylène fonctionnalisés, des copolymères cœur-écorce ou des copolymères à bloc.

Un ou plusieurs additifs peuvent être ajoutés lors de la fabrication de corps creux bi-étirés à partir du polyester thermoplastique semi-cristallin afin de lui conférer des propriétés particulières.

Ainsi, à titre d'exemple d'additif, on peut citer les agents opacifiants, des colorants et des pigments. Ils peuvent être choisis parmi l'acétate de cobalt et les composés suivants : HS-325 Sandoplast^{®} RED BB (qui est un composé porteur d'une fonction azo également connu sous le nom Solvent Red 195), HS-510 Sandoplast^{®} Blue 2B qui est une anthraquinone, Polysynthren^{®} Blue R, et Clariant^{®} RSB Violet.

L'additif peut être également un agent de résistance aux UV comme par exemple des molécules type benzophénone ou benzotriazole, comme la gamme Tinuvin^{™} de BASF : tinuvin 326, tinuvin P ou le tinuvin 234 par exemple ou des amines encombrées comme la gamme Chimassorb^{™} de BASF : Chimassorb 2020, Chimasorb 81 ou Chimassorb 944 par exemple.

L'additif peut également être un agent ignifuge ou retardateur de flamme, comme par exemple des dérivés halogénés ou des retardateurs de flamme non halogénés (par exemple des dérivés phosphorés, tels que les Exolit^{®} OP) ou comme la gamme des cyanurates mélaminés (par exemple les melapur^{™} : mélapur 200) ou encore des hydroxydes d'aluminium ou de magnésium.

L'utilisation selon la présente invention de polyester thermoplastique semi-cristallin pour la fabrication de corps creux bi-étirés est particulièrement avantageuse.

En effet, les corps creux bi-étirés ainsi fabriqués à partir de polyester thermoplastique semi-cristallin tel que précédemment décrit, avec notamment un ratio molaire motifs 1,4 : 3,6-dianhydrohexitol (A) / somme des motifs 1,4 : 3,6-dianhydrohexitol (A) et des motifs diols alicycliques (B) autre que les motifs 1,4 : 3,6-dianhydrohexitol (A) d'au moins 0,1 et d'au plus 0,30 et une viscosité réduite en solution supérieure à 50 mL/g, présentent des propriétés remarquables, notamment en ce qui concerne le remplissage à chaud.

Ainsi, les corps creux bi-étirés fabriqués peuvent être remplis à chaud, sans se déformer ni fuir, jusqu'à des températures de 105°C.

Un second objet de l'invention concerne un procédé de fabrication d'un corps creux bi-étiré, ledit procédé comprenant les étapes suivantes de:
- Fourniture d'un polyester thermoplastique semi-cristallin tel que défini ci-dessous.
- Préparation dudit bi-orienté à partir du polyester thermoplastique semi-cristallin obtenu à l'étape précédente.

L'étape de préparation peut être réalisée selon les méthodes connues de l'homme du métier classiquement mises en œuvre pour la fabrication des corps creux bi-étirés.

Ainsi à titre d'exemple, la préparation peut être réalisée par extrusion-soufflage avec bi-étirage ou par injection-soufflage. De préférence la fabrication est réalisée par injection-soufflage.

Un troisième objet de l'invention concerne des corps creux bi-étirés comprenant le polyester thermoplastique semi-cristallin décrit ci-dessus. Les corps creux bi-étirés selon l'invention peuvent également comprendre un polymère additionnel et/ou un ou plusieurs additifs tels que définis ci-dessus.
- Le polyester thermoplastique semi-cristallin particulièrement adapté pour la fabrication de corps creux bi-étirés peut être préparé par un procédé de synthèse comprenant :
- une étape d'introduction dans un réacteur de monomères comprenant au moins un 1,4 : 3,6-dianhydrohexitol (A), au moins un diol alicyclique (B) autre que les 1,4 : 3,6-dianhydrohexitols (A) et au moins un acide téréphtalique (C), le ratio molaire ((A)+(B))/(C) allant de 1,05 à 1,5, lesdits monomères étant exempts de diol aliphatique non cyclique ou comprenant, par rapport à la totalité des monomères

introduits, une quantité molaire de motifs diol aliphatique non cyclique inférieure à 5% ;
- une étape d'introduction dans le réacteur d'un système catalytique ;
- une étape de polymérisation desdits monomères pour former le polyester, ladite étape consistant en :
   ▪ un premier stade d'oligomérisation pendant lequel le milieu réactionnel est agité sous atmosphère inerte à une température allant de 265 à 280°C, avantageusement de 270 à 280°C, par exemple 275°C ;
   ▪ un second stade de condensation des oligomères pendant lequel les oligomères formés sont agités sous vide à une température allant de 278 à 300°C afin de former le polyester, avantageusement de 280 à 290°C, par exemple 285°C ;
- une étape de récupération du polyester thermoplastique semi-cristallin.

Ce premier stade du procédé se fait en atmosphère inerte, c'est-à-dire sous atmosphère d'au moins un gaz inerte. Ce gaz inerte peut notamment être du diazote. Ce premier stade peut se faire sous flux de gaz et il peut également se faire sous pression, par exemple à une pression comprise entre 1,05 et 8 bars.

De préférence, la pression va de 3 à 8 bars, tout préférentiellement de 5 à 7,5 bars, par exemple 6,6 bars. Dans ces conditions de pression préférées, on favorise la réaction de l'ensemble des monomères entre eux en limitant la perte de monomères lors de ce stade.

Préalablement au premier stade d'oligomérisation, une étape de désoxygénation des monomères est préférentiellement réalisée. Elle peut se faire par exemple une fois les monomères introduits dans le réacteur, en réalisant un vide puis en y introduisant un gaz inerte tel que l'azote. Ce cycle vide-introduction de gaz inerte peut être répété à plusieurs reprises, par exemple de 3 à 5 fois. De préférence, ce cycle vide-azote est réalisé à une température entre 60 et 80°C afin que les réactifs, et notamment les diols, soient totalement fondus. Cette étape de désoxygénation présente l'avantage d'améliorer les propriétés de coloration du polyester obtenu à la fin du procédé.

Le second stade de condensation des oligomères se fait sous vide. La pression peut diminuer au cours de ce second stade de manière continue en utilisant des rampes de baisse de pression, par paliers ou encore en utilisant une combinaison de rampes de baisse de pression et de paliers. De préférence, à la fin de ce second stade, la pression est inférieure à 10 mbar, tout préférentiellement inférieure à 1 mbar.

Le premier stade de l'étape de polymérisation a de préférence une durée allant de 20 minutes à 5 heures. Avantageusement, le second stade a une durée allant de 30 minutes à 6 heures, le début de ce stade consistant au moment où le réacteur est placé sous vide, c'est-à-dire à une pression inférieure à 1 bar.

Le procédé comprend en outre une étape d'introduction dans le réacteur d'un système catalytique. Cette étape peut se dérouler préalablement ou pendant l'étape de polymérisation décrite précédemment.

On entend par système catalytique, un catalyseur ou un mélange de catalyseurs, éventuellement dispersé(s) ou fixé(s) sur un support inerte.

Le catalyseur est utilisé dans des quantités adaptées pour obtenir un polymère de haute viscosité conformément à l'utilisation selon l'invention pour la fabrication de corps creux.

On utilise avantageusement lors du stade d'oligomérisation un catalyseur d'estérification. Ce catalyseur d'estérification peut être choisi parmi les dérivés d'étain, de titane, de zirconium, d'hafnium, de zinc, de manganèse, de calcium, de strontium, des catalyseurs organiques comme l'acide para-toluène sulfonique (APTS), l'acide méthane sulfonique (AMS) ou un mélange de ces catalyseurs. A titre d'exemple de tels composés, on peut citer ceux donnés dans la demande US2011282020A1 aux paragraphes [0026] à [0029], et à la page 5 de la demande WO 2013/062408 A1.

De préférence, on utilise lors du premier stade de transestérification, un dérivé de zinc, ou un dérivé de manganèse d'étain ou de germanium.

A titre d'exemple de quantités massiques, on peut utiliser de 10 à 500 ppm de métal contenu dans le système catalytique lors du stade d'oligomérisation, par rapport à la quantité de monomères introduits.

En fin de transestérification, le catalyseur de la première étape peut être optionnellement bloqué par l'ajout d'acide phosphoreux ou d'acide phosphorique, ou alors comme dans le cas de l'étain (IV) réduit par des phosphites tels que le phosphite de triphenyle ou les phosphite des tris(nonylephenyle) ou ceux cités au paragraphe [0034] de la demande US2011282020A1.

Le second stade de condensation des oligomères peut optionnellement être réalisé avec l'ajout d'un catalyseur. Ce catalyseur est avantageusement choisi parmi les dérivés d'étain, préférentiellement d'étain, de titane, de zirconium, de germanium, d'antimoine, de bismuth, d'hafnium, de magnésium, de cérium, de zinc, de cobalt, de fer, de manganèse, de calcium, de strontium, de sodium, de potassium, d'aluminium, de lithium ou d'un mélange de ces catalyseurs. Des exemples de tels composés peuvent être par exemple ceux donnés dans le brevet EP 1882712 B1 aux paragraphes [0090] à [0094].

De préférence, le catalyseur est un dérivé d'étain, de titane, de germanium, d'aluminium ou d'antimoine.

A titre d'exemple de quantités massiques, on peut utiliser de 10 à 500 ppm de métal contenu dans le système catalytique lors du stade de condensation des oligomères, par rapport à la quantité de monomères introduits.

Tout préférentiellement, on utilise un système catalytique lors du premier stade et du second stade de polymérisation. Ledit système est avantageusement constitué d'un catalyseur à base d'étain ou d'un mélange de catalyseurs à base d'étain, de titane, de germanium et d'aluminium.

A titre d'exemple, on peut utiliser une quantité massique de 10 à 500 ppm de métal contenu dans le système catalytique, par rapport à la quantité de monomères introduits.

Selon le procédé de préparation, on utilise avantageusement un anti-oxydant lors de l'étape de polymérisation des monomères. Ces anti-oxydants permettent de réduire la coloration du polyester obtenu. Les anti-oxydants peuvent être des anti-oxydants primaires et/ou secondaires. L'anti-oxydant primaire peut être un phénol encombré stériquement tels que les composés Hostanox^{®} 0 3, Hostanox^{®} 0 10, Hostanox^{®} 0 16, Ultranox^{®} 210, Ultranox^{®}276, Dovernox^{®} 10, Dovernox^{®} 76, Dovernox^{®} 3114, Irganox^{®} 1010, Irganox^{®} 1076 ou un phosphonate tel que I'lrgamod^{®} 195. L'anti-oxydant secondaire peut être des composés phosphorés trivalents tels que Ultranox^{®} 626, Doverphos^{®} S-9228, Hostanox^{®} P-EPQ, ou l'Irgafos 168.

Il est également possible d'introduire, comme additif de polymérisation dans le réacteur, au moins un composé susceptible de limiter les réactions parasites d'éthérification tel que l'acétate de sodium, le tétraméthylammonium hydroxyde ou le tétraéthylammonium hydroxyde.

Enfin, le procédé de synthèse comprend une étape de récupération du polyester à l'issue de l'étape de polymérisation. Le polyester thermoplastique semi-cristallin ainsi récupéré peut ensuite être mis en forme tel que décrit précédemment.

Selon une variante du procédé de synthèse, une étape d'augmentation de masse molaire est réalisée après l'étape de récupération du polyester thermoplastique semi-cristallin.

L'étape d'augmentation de masse molaire est réalisée par post-polymérisation et peut consister en une étape de polycondensation à l'état solide (PCS) du polyester thermoplastique semi-cristallin ou en une étape d'extrusion réactive du polyester thermoplastique semi-cristallin en présence d'au moins un allongeur de chaîne.

Ainsi, selon une première variante du procédé de fabrication, l'étape de post-polymérisation est réalisée par PCS.

La PCS est généralement réalisée à une température comprise entre la température de transition vitreuse et la température de fusion du polymère. Ainsi, pour réaliser la PCS, il est nécessaire que le polymère soit semi-cristallin. De préférence, ce dernier présente une chaleur de fusion supérieure à 10 J/g, de préférence supérieure à 20 J/g, la mesure de cette chaleur de fusion consistant à faire subir à un échantillon de ce polymère de viscosité réduite en solution plus faible un traitement thermique à 170°C pendant 16 heures puis à évaluer la chaleur de fusion par DSC en chauffant l'échantillon à 10 K/min.

Avantageusement, l'étape de PCS est réalisée à une température allant de 190 à 280°C, de préférence allant de 200 à 250°C, cette étape devant impérativement être réalisée à une température inférieure à la température de fusion du polyester thermoplastique semi-cristallin.

L'étape de PCS peut se faire en atmosphère en inerte, par exemple sous azote ou sous argon ou sous vide.

Selon une deuxième variante du procédé de fabrication, l'étape de post-polymérisation est réalisée par extrusion réactive du polyester thermoplastique semi-cristallin en présence d'au moins un allongeur de chaîne.

L'allongeur de chaîne est un composé comprenant deux fonctions susceptibles de réagir, en extrusion réactive, avec des fonctions, alcool, acide carboxylique et/ou ester d'acide carboxylique du polyester thermoplastique semi-cristallin. L'allongeur de chaîne peut par exemple être choisi parmi les composés comprenant deux fonctions isocyanate, isocyanurate, lactame, lactone, carbonate, époxy, oxazoline et imide, lesdites fonctions pouvant être identiques ou différentes. L'allongement de chaîne du polyester thermoplastique peut être effectué dans tous les réacteurs aptes à mélanger un milieu très visqueux avec une agitation suffisamment dispersive pour assurer une bonne interface entre la matière fondue et le ciel gazeux du réacteur. Un réacteur particulièrement adapté à cette étape de traitement est l'extrusion.

L'extrusion réactive peut être réalisée dans une extrudeuse de tout type, notamment une extrudeuse mono-vis, une extrudeuse bi-vis co-rotatives ou une extrudeuse bi-vis contrarotatives. Toutefois, on préfère réaliser cette extrusion réactive en utilisant une extrudeuse co-rotative.

L'étape d'extrusion réactive peut se faire en :
- introduisant le polymère dans l'extrudeuse de manière à faire fondre ledit polymère ;
- puis introduisant dans le polymère fondu l'allongeur de chaîne ;
- puis faisant réagir dans l'extrudeuse le polymère avec l'allongeur de chaîne ;
- puis récupérant le polyester thermoplastique semi-cristallin obtenu à l'étape d'extrusion.

Lors de l'extrusion, la température à l'intérieur de l'extrudeuse est réglée de manière à être à une supérieure à la température de fusion du polymère. La température à l'intérieur de l'extrudeuse peut aller de 150 à 320°C.

L'invention sera mieux comprise à l'aide des exemples et figures ci-après qui se veulent purement illustratifs et ne limitent en rien la portée de la protection.

### Exemples

Les propriétés des polymères ont été étudiées avec les techniques suivantes :

### Viscosité réduite en solution

La viscosité réduite en solution est évaluée à l'aide d'un viscosimètre capillaire Ubbelohde à 25°C dans un mélange équimassique de phénol et d'ortho-dichlorobenzène après dissolution du polymère à 130°C sous agitation, la concentration de polymère introduit étant de 5g/L.

### DSC

Les propriétés thermiques des polyesters ont été mesurées par calorimétrie différentielle à balayage (DSC) : L'échantillon est tout d'abord chauffé sous atmosphère d'azote dans un creuset ouvert de 10 à 320°C (10°C.min-1), refroidi à 10°C (10°C.min-1) puis réchauffé à 320°C dans les mêmes conditions que la première étape. Les températures de transition vitreuse ont été prises au point médian (en anglais mid-point) du second chauffage. Les températures de fusion éventuelles sont déterminées sur le pic endothermique (début du pic (en anglais, onset)) au premier chauffage.

De même la détermination de l'enthalpie de fusion (aire sous la courbe) est réalisée au premier chauffage.

Pour les exemples illustratifs présentés ci-dessous les réactifs suivants ont été utilisés : 1,4-Cyclohexane dimethanol (pureté 99%, mélange d'isomères cis et trans)
Isosorbide (pureté >99,5%) Polysorb^{®} P de Roquette Frères
Acide téréphtalique (pureté 99+%) de Acros
Irganox^{®} 1010 de BASF AG
Dibutylétain oxyde (pureté 98%) de Sigma Aldrich

### Exemple 1: Préparation d'un polyester thermoplastique semi-cristallin P1 et utilisation pour la fabrication de bouteille.

### A : polymérisation

Dans un réacteur de 7,5 L sont ajoutés 1432 g (9,9 mol) de 1,4-cyclohexanedimethanol, 484 g (3,3 mol) d'isosorbide, 2000 g (12,0 mol) d'acide téréphtalique, 1,65 g d'Irganox 1010 (anti-oxydant) et 1,39 g de dibutylétainoxyde (catalyseur). Pour extraire l'oxygène résiduel des cristaux d'isosorbide, 4 cycles vide-azote sont effectués une fois la température du milieu réactionnel comprise entre 60 et 80°C.

Le mélange réactionnel est ensuite chauffé à 275°C (4°C/min) sous 6,6 bars de pression et sous une agitation constante (150 tr/min) jusqu'à obtenir un taux d'estérification de 87%. Le taux d'estérification étant estimé à partir de la masse de distillat collectée. Puis, la pression est réduite à 0,7 mbar en 90 minutes selon une rampe logarithmique et la température amenée à 285 °C.

Ces conditions de vide et de température ont été maintenues jusqu'à obtenir une augmentation de couple de 12,1 Nm par rapport au couple initial.

Enfin, un jonc de polymère est coulé par la vanne de fond du réacteur, refroidi dans un bac d'eau thermo-régulé à 15°C et découpé sous de forme de granulés d'environ 15 mg.

La résine ainsi obtenue a une viscosité réduite en solution de 80,1 mL/g.

L'analyse par RMN ¹H du polyester montre que le polyester final contient 17,0 % mol d'isosorbide par rapport aux diols.

En ce qui concerne les propriétés thermiques, le polyester P1 présente une température de transition vitreuse de 96°C, une température de fusion de 253°C avec une enthalpie de fusion de 23,2 J/g.

### B : Injection-soufflage avec bi-étirage en moule

Les granulés de polyester **P1** obtenus à l'étape A de polymérisation sont séchés sous vide à 140°C pendant 3h afin d'atteindre un taux d'humidité résiduelle inférieur à 300 ppm, dans cet exemple, le taux d'humidité résiduelle des granulés est de 134 ppm.

L'injection s'effectue sur une presse mono-cavité Husky avec obturateurs.

Les granulés, maintenus en condition anhydride, sont alors introduits dans la trémie de la presse à injecter afin d'obtenir les préformes.

Les paramètres d'injection sont détaillés dans le tableau 1 ci-dessous :

**TABLEAU 1**

| **Paramètres** | **Unités** | **Valeur** |
|---|---|---|
| Température zone d'introduction | °C | 230 |
| Température du plastique à l'état fondu (buse / fourreau) | °C | 285/280/280/270 |
| Température du moule | °C | 50 |
| Vitesse d'injection | mm/s | 80 |
| Pression de maintien | bar | 29 |
| Durée du maintien | s | 20 |
| Temps de refroidissement | s | 20 |

Les préformes obtenues à partir du polyester **P1** ont un poids d'environ 23 g après injection et présentent un col renforcé spécifique au remplissage à chaud.

Les préformes ainsi injectées sont ensuite soufflées dans un carrousel de soufflage de la marque SBO série 2 de l'entreprise SIDEL: Taux de BO 11.51 : 3.59 en radial et 3,20 en axial avec une cadence de 1550 bouteille/heure/moule.

Pour le soufflage dans le carrousel, ce dernier présente un pré-chauffage des préformes à 150 °C à cœur par des lampes infra-rouges dans la zone de conditionnement thermique sous flux d'air à température ambiante. La préforme est positionnée au sein du moule qui est à une température de 170 °C et ce dernier est alors refermé.

L'injection de l'air comprimé est effectuée via une canule qui assure un bi-étirage de la bouteille.

Le démoulage se fait automatiquement et une bouteille bi-étirée est obtenue à la sortie du carrousel.

Les bouteilles ainsi formées présentent une répartition de matière homogène et un volume de 500 mL.

### Exemple 2 : Préparation d'un polyester thermoplastique semi-cristallin P2 et utilisation pour la fabrication de bouteille.

Un second polyester thermoplastique semi-cristallin pour une utilisation selon l'invention a également été préparé. Le protocole est décrit ci-après. A la différence du polyester **P1,** ce polyester **P2** a subi une étape d'augmentation de masse molaire par post condensation.

### A : polymérisation

Dans un réacteur de 7,5L sont ajoutés 1194 g (8,3 mol) de 1,4-cyclohexanedimethanol, 726 g (5,0 mol) d'isosorbide, 2000 g (12,0 mol) d'acide téréphtalique, 1,65 g d'Irganox 1010 (anti-oxydant) et 1,39 g de dibutylétainoxyde (catalyseur). Pour extraire l'oxygène résiduel des cristaux d'isosorbide, 4 cycles vide-azote sont effectués une fois la température du milieu réactionnel comprise entre 60 et 80 °C. Le mélange réactionnel est ensuite chauffé à 275°C (4°C/min) sous 6,6 bars de pression et sous agitation constante (150 tr/min). Le taux d'estérification est estimé à partir de la quantité de distillat collectée. Puis, la pression est réduite à 0,7 mbar en 90 minutes selon une rampe logarithmique et la température amenée à 285 °C.

Ces conditions de vide et de température ont été maintenues jusqu'à obtenir une augmentation de couple de 11,1 Nm par rapport au couple initial.

Enfin, un jonc de polymère est coulé par la vanne de fond du réacteur, refroidi dans un bac d'eau thermo-régulé à 15°C et découpé sous forme de granulés d'environ 15 mg.

La résine ainsi obtenue a une viscosité réduite en solution de 66,2 mL/g⁻¹.

L'analyse par RMN ¹H du polyester montre que le polyester final contient 30,2 mol% d'isosorbide par rapport aux diols.

Les granulés sont ensuite cristallisés durant 5 heures à une température de 150°C sous azote puis une étape de post condensation en phase solide a été réalisée sur 25 kg de ces granulés durant 20h à 210°C sous flux d'azote (1500 L/h) pour augmenter la masse molaire. La résine après condensation en phase solide présente une viscosité réduite en solution de 94 mL.g⁻¹.

En ce qui concerne les propriétés thermiques, le polyester **P2** présente une température de transition vitreuse de 113°C, une température de fusion de 230 °C avec une enthalpie de fusion de 22 J/g.

### B- Injection- soufflage avec bi-étirage en moule

Les granulés de polyester **P2** obtenus à l'étape A de polymérisation sont séchés sous vide à 140°C afin d'atteindre un taux d'humidité résiduelle inférieur à 300 ppm, dans cet exemple, le taux d'humidité résiduelle des granulés est de 172 ppm.

L'injection s'effectue sur une presse mono-cavité Husky avec obturateurs.

Les granulés, maintenus en condition anhydride, sont introduits dans la trémie de la presse à injecter afin d'obtenir les préformes.

Les autres étapes sont similaires à celles de l'exemple 1 à l'exception de modifications dans les paramètres d'injection où les températures des fourreaux sont un peu plus importantes.

Les paramètres d'injection sont détaillés dans le tableau 2 ci-dessous:

**TABLEAU 2**

| **Paramètres** | **Unités** | **Valeur** |
|---|---|---|
| Température zone d'introduction | °C | 230 |
| Température du plastique à l'état fondu (buse / fourreau) | °C | 275/270/270/260 |
| Température du moule | °C | 50 |
| Vitesse d'injection | mm/s | 80 |
| Pression de maintien | bar | 35 |
| Durée du maintien | s | 15 |
| Temps de refroidissement | s | 20 |

Les préformes obtenues à partir du polyester **P2** ont un poids d'environ 23 g après injection et présentent un col renforcé spécifique au remplissage à chaud.

Les préformes ainsi injectées sont ensuite soufflées dans un carrousel de soufflage de la marque SBO série 2 de l'entreprise SIDEL: Taux de BO 11.51 : 3.59 en radial et 3,20 en axial avec une cadence de 1550 bouteille/heure/moule et une température de moule de 170 °C.

Pour le soufflage dans le carrousel, ce dernier présente un pré-chauffage des préformes à 140°C à cœur par des lampes infra-rouges dans la zone de conditionnement thermique sous flux d'air à température ambiante. La préforme est positionnée au sein du moule qui est à une température de moule de 170°C et ce dernier est alors refermé. L'injection de l'air comprimé est effectuée via une canule qui assure un bi-étirage de la bouteille.

Le démoulage se fait automatiquement et une bouteille bi-étirée est obtenue à la sortie du carrousel.

Les bouteilles ainsi formées présentent une répartition de matière homogène et un volume de 500 mL.

### Exemple 3 : Préparation d'un polyester thermoplastique amorphe P3 et utilisation pour la fabrication de bouteille par extrusion-soufflage.

A la différence des polyesters **P1** et **P2,** le polyester **P3** est un polyester servant de comparatif et présente ainsi ratio molaire [A]/([A]+[B]) de 0,44.

### A : Polymérisation

Dans un réacteur de 7,5 L sont ajoutés 859 g (6 mol) de 1,4-cyclohexanedimethanol, 871 g (6 mol) d'isosorbide, 1800 g (10.8 mol) d'acide téréphtalique, 1,5 g d'Irganox 1010 (anti-oxydant) et 1,23 g de dibutylétainoxyde (catalyseur). Pour extraire l'oxygène résiduel des cristaux d'isosorbide, 4 cycles vide-azote sont effectués une fois la température du milieu réactionnel comprise entre 60 et 80°C.

Le mélange réactionnel est ensuite chauffé à 275°C (4°C/min) sous 6,6 bars de pression et sous agitation constante (150 tr/min). Le taux d'estérification est estimé à partir de la quantité de distillat collectée. Puis, la pression est réduite à 0,7 mbar en 90 minutes selon une rampe logarithmique et la température amenée à 285°C. Ces conditions de vide et de température ont été maintenues jusqu'à obtenir une augmentation de couple de 10 Nm par rapport au couple initial. Enfin, un jonc de polymère est coulé par la vanne de fond du réacteur, refroidi dans un bac d'eau thermo-régulé à 15 °C et découpé sous forme de granulés d'environ 15 mg.

La résine ainsi obtenue avec ce polyester **P3** a une viscosité réduite en solution de 54.9 mL/g.

L'analyse par RMN ¹H du polyester montre que le polyester final contient 44 mol% d'isosorbide par rapport aux diols. En ce qui concerne les propriétés thermiques (relevées au second chauffage), le polymère présente une température de transition vitreuse de 125°C.

### B : Réalisation de corps creux par extrusion de paraison

Les granulés du polyester **P3** obtenus à l'étape A de polymérisation sont séchés sous vide à 110°C afin d'atteindre des taux d'humidité résiduelle inférieurs à 300 ppm, dans cet exemple, la teneur en eau des granulés est de 230 ppm. Les granulés, maintenus en atmosphère sèche sont introduits dans la trémie de l'extrudeuse.

L'extrusion s'effectue sur une souffleuse HESTA HV200 et les réglages sont regroupés dans le tableau 3 ci-dessous :

**TABLEAU 3**

| **Dénomination** | **Unités** | **Valeurs** |
|---|---|---|
| Température du plastique à l'état fondu (extrudeuse / filière) | °C | 250/250/260/260/270/270 |
| Température du moule | °C | 50 |
| Vitesse d'injection | rpm | 100 |
| Temps de soufflage | sec | 7 |
| Temps de contrôle | S | 1 |
| Chute de pression admissible | mbar | 5 |
| Temps de cycle | S | 15 |
| Cadence | Corps creux/heure | 240 |

Grâce à une filière annulaire, une paraison est extrudée en continu. Le moule vient se refermer autour de la paraison, une lame vient couper la paraison sur le haut du moule formant ainsi la préforme et cette dernière est transférée sur un deuxième poste de travail.

A ce moment-là, une canne de soufflage vient injecter de l'air comprimé à l'intérieur de la préforme afin de la bi-étirer et de la plaquer sur les parois du moule.

Enfin, après ouverture du moule, la pièce est éjectée et le moule retourne à sa position initiale pour se refermer sur une nouvelle préforme.

Le corps creux amorphe ainsi mis en forme possède un poids de 23 g et l'absence de raies en diffraction aux Rayons X confirme bien son caractère amorphe.

### Exemple 4 : Test de remplissage à chaud de bouteilles obtenues avec les polyesters thermoplastiques semi-cristallin P1 et P2 et le polyester thermoplastique amorphe P3 (comparatif).

### A : Remplissage à chaud avec de l'eau à 90°C

Les bouteilles obtenues par soufflage à partir des préformes fabriquées avec les polyesters **P1** et **P2** ont été remplies à chaud avec de l'eau à une température de 90°C avec comme objectif une déformation dimensionnelle inférieure à 2% maximum.

La mesure de la stabilité dimensionnelle s'effectue en mesurant le diamètre et la hauteur en 3 points : col, centre et base du corps creux, avant le remplissage et 24h après le remplissage à chaud. Le pourcentage correspond à une moyenne de déformation sur chacune de ces dimensions.

Dans le cas du polyester **P3,** la bouteille subit des déformations et un affaissement dès l'introduction des premiers volumes de liquide à 90°C. Il n'a donc pas été possible sur la bouteille constituée du polymère **P3** d'effectuer un remplissage à chaud.

Les mesures montrent que les bouteilles fabriquées à partir des polyesters P1 et P2 présentent une déformation dimensionnelle inférieure à 1% après remplissage.

Les polyesters thermoplastiques selon l'invention sont donc particulièrement avantageux pour une utilisation dans la fabrication de corps creux bi-étirés, notamment de bouteille, nécessitant une bonne tenue à la déformation lors d'un remplissage à chaud.

### B : Remplissage à chaud avec de l'huile à 105°C

Les bouteilles obtenues par soufflage à partir des préformes fabriquées avec les polyesters **P1, P2** et **P3** ont été remplies à chaud avec de l'huile à une température de 105°C avec comme objectif une déformation dimensionnelle inférieure à 2% maximum.

Les bouteilles obtenues avec le polyester **P1** et **P3** subissent des déformations et un affaissement dès l'introduction des premiers volumes de liquide à 105°C.

Ceci s'explique par le fait que la température de transition vitreuse du polyester **P1** est plus basse que la température de l'huile utilisée pour le remplissage et par le fait que le polyester **P3** est un polyester amorphe. Ainsi, il n'a donc pas été possible d'obtenir une déformation dimensionnelle inférieure à 2% pour les bouteilles obtenues à partir des polyesters **P1** et **P3** lors d'un remplissage à chaud à 105°C.

A l'inverse, les mesures montrent que les bouteilles fabriquées à partir du polyester **P2** présentent une déformation dimensionnelle inférieure à 1,3% après remplissage.

Les polyesters thermoplastiques selon l'invention sont donc particulièrement avantageux pour une utilisation dans la fabrication de corps creux bi-étirés, notamment de bouteille, nécessitant une bonne résistance à la déformation lors d'un remplissage à chaud.

### Exemple 5: Préparation d'un polyester thermoplastique semi-cristallin et utilisation pour la fabrication d'une bouteille.

### A : Préparation

Un quatrième polyester semi-cristallin **P4** selon l'invention a été préparé suivant le même mode opératoire que l'exemple 1. Les quantités des différents composés ont été adaptées de manière à obtenir le polyester **P4** présentant 25 % en moles d'isosorbide.

Les quantités ont été déterminées par RMM ¹H et les quantités sont exprimées en pourcentage par rapport à la quantité totale de diols dans le polyester.

La viscosité réduite en solution du polyester **P4** est 79 mL/g.

### B- Mise en forme de la bouteille par iniection-soufflaae (ISBM)

Les granulés du polyester **P4** obtenus à l'étape A de polymérisation sont ensuite séchés avant l'injection pendant 6h à 150°C et présentent ainsi une teneur en humidité de 0,129 % en poids.

L'injection s'effectue sur une presse mono-cavité Husky avec obturateurs.

Les granulés, maintenus en condition anhydride, sont introduits dans la trémie de la presse à injecter et les paramètres d'injection sont détaillés dans le tableau 4 ci-dessous :

**TABLEAU 4**

| **Paramètres** | **Unités** | **Valeurs** |
|---|---|---|
| Diamètre de la vis | mm | 35 |
| Ratio L/D | / | 23 |
| Température d'injection (buse / fourreau) | °C | 290/280/270/260/ 250 |
| Température du moule | °C | 50 |
| Vitesse de chargement | mm/s | 100 |
| Vitesse d'injection | cm³/s | 40 / 128 |
| Pression d'injection | bars | 1250 |
| Pression de maintien | bars | 900 |
| Contre-pression (backpressure) | bars | 75 |
| Durée du maintien | s | 15 |
| Temps de refroidissement | s | 12 |

Après l'injection, les préformes obtenues présentent un poids de 23,7 gr et possèdent un col renforcé spécifique au remplissage à chaud.

Les préformes fabriquées ont ensuite été soufflées dans un moule pour l'obtention de bouteille de 0,5 L. La machine utilisée pour le soufflage présente les caractéristiques générales ci-dessous :

| **Caractéristiques** | **Valeurs** |
|---|---|
| Volume maximum du produit | 2,5-5 L |
| Hauteur maximale de la préforme | 200 mm |
| Epaisseur de la paroi de la préforme | 1-4 mm |
| Diamètre maximal du produit | 170 mm |
| Hauteur maximal du produit | 350 mm |
| Capacité de production | 500-800 Unités/heure |

Le soufflage des préformes a ensuite été effectué selon les paramètres suivants :

| **Paramètres** | **Valeurs** |
|---|---|
| Température de ramollissement (soft temperature) | 86°C |
| Température du moule | 25 °C |
| Délai d'allongement (strech delay) | 0,05 s |
| Délai de soufflage (blown delay) | 0,2 s |
| Premier soufflage | 0,3 s |
| Second soufflage | 4 s |
| Déchargement | 1 s |

Les bouteilles obtenues présentent un aspect uniforme et aucune déformation de surface n'est observée à l'œil nu.

### C : Remplissage à chaud avec de l'eau à 90°C

Les bouteilles sont remplies à chaud avec de l'eau à une température de 90°C avec comme objectif d'aboutir à une déformation dimensionnelle inférieure à 2% maximum.

Comme dans les exemples précédents, la mesure de la stabilité dimensionnelle s'effectue en mesurant le diamètre et la hauteur en 3 points : col, centre et base du corps creux, avant le remplissage et 24h après le remplissage à chaud. Le pourcentage correspond à une moyenne de déformation sur chacune de ces dimensions.

Les mesures montrent que les bouteilles fabriquées à partir du polyester **P4** présentent une déformation dimensionnelle inférieure à 1% après le remplissage.

Cet exemple démontre de nouveau que les polyesters thermoplastiques selon l'invention sont particulièrement avantageux pour une utilisation dans la fabrication de corps creux bi-étirés lorsqu'il est nécessaire d'obtenir une bonne tenue à la déformation lors d'un remplissage à chaud.

## Revendications

1. Utilisation d'un polyester thermoplastique semi-cristallin pour la fabrication de corps creux bi-étirés, ledit polyester comprenant :
• au moins un motif 1,4 : 3,6-dianhydrohexitol (A) ;
• au moins un motif diol alicyclique (B) autre que les motifs 1,4 : 3,6-dianhydrohexitol (A) ;
• au moins un motif acide téréphtalique (C) ;
dans lequel le ratio molaire (A)/[ (A)+(B)] étant d'au moins 0,1 et d'au plus 0,30 ; ledit polyester étant exempt de motifs diol aliphatique non cyclique et dont la viscosité réduite en solution (25°C ; phénol (50%m) : ortho-dichlorobenzène (50%m) ; 5 g/L de polyester) est supérieure à 50 mL/g.

2. Utilisation selon la revendication 1, **caractérisée en ce que** le diol alicyclique (B) est un diol choisi parmi le 1,4-cyclohexanedimethanol, le 1,2-cyclohexanedimethanol, le 1,3-cyclohexanedimethanol ou un mélange de ces diols, très préférentiellement le 1,4-cyclohexanedimethanol.

3. Utilisation selon l'une des revendications 1 ou 2, **caractérisée en ce que** le 1,4 : 3,6-dianhydrohexitol (A) est l'isosorbide.

4. Utilisation selon l'une des revendications 1 à 3, **caractérisée en ce que** le ratio molaire (motif 3,6-dianhydrohexitol (A) + motif diol alicyclique (B) autre que les motifs 1,4 : 3,6-dianhydrohexitol (A))/( motif acide téréphtalique (C)) est de 1,05 à 1,5.

5. Utilisation selon l'une des revendications 1 à 4, **caractérisée en ce que** le corps creux bi-étiré comprend un ou plusieurs polymères additionnels et/ou un ou plusieurs additifs.

6. Corps creux bi-étirés comprenant un polyester thermoplastique semi-cristallin comprenant :
• au moins un motif 1,4 : 3,6-dianhydrohexitol (A) ;
• au moins un motif diol alicyclique (B) autre que les motifs 1,4 : 3,6-dianhydrohexitol (A) ;
• au moins un motif acide téréphtalique (C) ;
dans lequel le ratio molaire (A)/[ (A)+(B)] étant d'au moins 0,1 et d'au plus 0,30 ; ledit polyester étant exempt de motifs diol aliphatique non cyclique et dont la viscosité réduite en solution (25°C ; phénol (50%m) : ortho-dichlorobenzène (50%m) ; 5 g/L de polyester) est supérieure à 50 mL/g.

7. Corps creux bi-étirés selon la revendication 6, **caractérisé en ce que** le diol alicyclique (B) est un diol choisi parmi le 1,4-cyclohexanedimethanol, le 1,2-cyclohexanedimethanol, le 1,3-cyclohexanedimethanol ou un mélange de ces diols, très préférentiellement le 1,4-cyclohexanedimethanol.

8. Corps creux bi-étirés selon l'une des revendications 6 ou 7, **caractérisé en ce que** le 1,4 : 3,6-dianhydrohexitol (A) est l'isosorbide.

9. Corps creux bi-étirés selon l'une des revendications 6 à 8, **caractérisé en ce que** le ratio molaire (motif 3,6-dianhydrohexitol (A) + motif diol alicyclique (B) autre que les motifs 1,4 : 3,6-dianhydrohexitol (A))/( motif acide téréphtalique (C)) est de 1,05 à 1,5.

10. Corps creux bi-étirés selon l'une des revendications 6 à 9, **caractérisé en ce que** le corps creux bi-étiré comprend un ou plusieurs polymères additionnels et/ou un ou plusieurs additifs.

11. Procédé de fabrication d'un corps creux bi-étiré comprenant les étapes suivantes de :
• Fourniture d'un polyester thermoplastique semi-cristallin comprenant au moins un motif 1,4 : 3,6-dianhydrohexitol (A), au moins un motif diol alicyclique (B) autre que les motifs 1,4 : 3,6-dianhydrohexitol (A), au moins un motif acide téréphtalique (C), dans lequel le ratio molaire (A)/[(A)+(B)] étant d'au moins 0,1 et d'au plus 0,30, ledit polyester étant exempt de motifs diol aliphatique non cyclique et dont la viscosité réduite en solution (25°C ; phénol (50%m) : ortho-dichlorobenzène (50%m) ; 5 g/L de polyester) est supérieure à 50 mL/g.
• Préparation dudit corps creux bi-orienté à partir du polyester thermoplastique semi-cristallin obtenu à l'étape précédente.

12. Procédé de fabrication selon la revendication 11, **caractérisé en ce que** l'étape de préparation est réalisée par extrusion-soufflage avec bi-étirage ou par injection-soufflage.

13. Procédé de fabrication selon les revendications 11 ou 12, **caractérisé en ce que** le diol alicyclique (B) est un diol choisi parmi le 1,4-cyclohexanedimethanol, le 1,2-cyclohexanedimethanol, le 1,3-cyclohexanedimethanol ou un mélange de ces diols, très préférentiellement le 1,4-cyclohexanedimethanol.

14. Procédé de fabrication selon l'une quelconque des revendications 11 à 13, **caractérisé en ce que** le 1,4 : 3,6-dianhydrohexitol (A) est l'isosorbide.

15. Procédé de fabrication selon l'une quelconque des revendications 11 à 14, **caractérisé en ce que** le ratio molaire (motif 3,6-dianhydrohexitol (A) + motif diol alicyclique (B) autre que les motifs 1,4 : 3,6-dianhydrohexitol (A))/( motif acide téréphtalique (C)) est de 1,05 à 1,5.

16. Procédé de fabrication selon l'une quelconque des revendications 11 à 15, **caractérisé en ce que** le corps creux bi-étiré comprend un ou plusieurs polymères additionnels et/ou un ou plusieurs additifs.

## Patentansprüche

1. Verwendung eines teilkristallinen thermoplastischen Polyesters zur Herstellung von biaxial verstreckten Hohlkörpern, wobei der Polyester Folgendes umfasst:
• wenigstens eine 1,4 : 3,6-Dianhydrohexitol-Einheit (A) ;
• wenigstens eine alicyclische Diol-Einheit (B), die von den 1,4 : 3,6-Dianhydrohexitol-Einheiten (A) verschieden ist;
• wenigstens eine Terephthalsäureeinheit (C);
wobei das Molverhältnis (A)/[(A)+(B)] wenigstens 0,1 und höchstens 0,30 beträgt; wobei der Polyester frei von nicht-zyklischen aliphatischen Dioleinheiten ist und wobei die reduzierte Lösungsviskosität (25°C; Phenol (50%m) : ortho-Dichlorbenzol (50%m); 5 g/l Polyester) größer als 50 ml/g ist.

2. Verwendung nach Anspruch 1, **dadurch gekennzeichnet, dass** das alicyclische Diol (B) ein Diol ist, das aus 1,4-Cyclohexandimethanol, 1,2-Cyclohexandimethanol, 1,3-Cyclohexandimethanol oder einer Mischung dieser Diole gewählt ist, und besonders bevorzugt 1,4-Cyclohexandimethanol ist.

3. Verwendung nach einem der Ansprüche 1 oder 2, **dadurch gekennzeichnet, dass** das 1,4 : 3,6- Dianhydrohexitol (A) Isosorbid ist.

4. Verwendung nach einem der Ansprüche 1 bis 3, **dadurch gekennzeichnet, dass** das Molverhältnis (3,6-Dianhydrohexitol-Einheit (A) + alicyclische Diol-Einheit (B), die von den 1,4 : 3,6-Dianhydrohexitol-Einheiten (A) verschieden ist)/( Terephthalsäure-Einheit (C)) 1,05 bis 1,5 beträgt.

5. Verwendung nach einem der Ansprüche 1 bis 4, **dadurch gekennzeichnet, dass** der biaxial verstreckte Hohlkörper ein oder mehrere zusätzliche Polymere und/oder ein oder mehrere Additive umfasst.

6. Biaxial verstreckter Hohlkörper, umfassend einen teilkristallinen thermoplastischen Polyester, umfassend:
• wenigstens eine 1,4 : 3,6-Dianhydrohexitol-Einheit (A) ;
• wenigstens eine alicyclische Diol-Einheit (B), die von den 1,4 : 3,6-Dianhydrohexitol-Einheiten (A) verschieden ist;
• wenigstens eine Terephthalsäureeinheit (C);
wobei das Molverhältnis (A)/[(A)+(B)] wenigstens 0,1 und höchstens 0,30 beträgt; wobei der Polyester frei von nichtcyclischen aliphatischen Dioleinheiten ist und eine reduzierte Lösungsviskosität (25°C; Phenol (50%m) : ortho-Dichlorbenzol (50%m); 5 g/l Polyester) von mehr als 50 ml/g aufweist.

7. Biaxial verstreckter Hohlkörper nach Anspruch 6, **dadurch gekennzeichnet, dass** das alicyclische Diol (B) ein Diol ist, das aus 1,4-Cyclohexandimethanol, 1,2-Cyclohexandimethanol, 1,3-Cyclohexandimethanol oder einer Mischung dieser Diole gewählt ist, besonders bevorzugt 1,4-Cyclohexandimethanol.

8. Biaxial verstreckter Hohlkörper nach einem der Ansprüche 6 oder 7, **dadurch gekennzeichnet, dass** das 1,4 : 3,6-Dianhydrohexitol (A) Isosorbid ist.

9. Biaxial verstreckter Hohlkörper nach einem der Ansprüche 6 bis 8, **dadurch gekennzeichnet, dass** das Molverhältnis (3,6-Dianhydrohexitol-Einheit (A) + alicyclische Diol-Einheit (B), die von den 1,4 : 3,6-Dianhydrohexitol-Einheiten (A) verschieden ist)/ (Terephthalsäure-Einheit (C)) 1,05 bis 1,5 beträgt.

10. Biaxial verstreckter Hohlkörper nach einem der Ansprüche 6 bis 9, **dadurch gekennzeichnet, dass** der biaxial verstreckte Hohlkörper ein oder mehrere zusätzliche Polymere und/oder ein oder mehrere Additive enthält.

11. Verfahren zur Herstellung eines biaxial verstreckten Hohlkörpers, umfassend die folgenden Schritte:
• Bereitstellung eines teilkristallinen thermoplastischen Polyesters, der wenigstens eine 1,4 : 3,6-Dianhydrohexitol-Einheit (A), wenigstens eine alicyclische Diol-Einheit (B), die von den 1,4 : 3,6-Dianhydrohexitol-Einheiten (A) verschieden ist, wenigstens eine Terephthalsäureeinheit (C), wobei das Molverhältnis (A)/[(A)+(B)] wenigstens 0,1 und höchstens 0,30 beträgt, wobei der Polyester frei von nichtcyclischen aliphatischen Dioleinheiten ist und dessen reduzierte Viskosität in Lösung (25°C; Phenol (50%m) : ortho-Dichlorbenzol (50%m); 5 g/l Polyester) größer als 50 ml/g ist.
• Herstellung des genannten biaxial orientierten Hohlkörpers aus dem im vorangegangenen Schritt erhaltenen teilkristallinen thermoplastischen Polyester.

12. Herstellungsverfahren nach Anspruch 11, **dadurch gekennzeichnet, dass** der Vorbereitungsschritt durch Extrusionsblasformen mit biaxialer Verstreckung oder durch Spritzblasformen durchgeführt wird.

13. Herstellungsverfahren nach Anspruch 11 oder 12, **dadurch gekennzeichnet, dass** das alicyclische Diol (B) ein Diol ist, das aus 1,4-Cyclohexandimethanol, 1,2-Cyclohexandimethanol, 1,3-Cyclohexandimethanol oder einer Mischung dieser Diole gewählt ist, besonders bevorzugt 1,4-Cyclohexandimethanol.

14. Herstellungsverfahren nach einem der Ansprüche 11 bis 13, **dadurch gekennzeichnet, dass** das 1,4 : 3,6-Dianhydrohexitol (A) Isosorbid ist.

15. Herstellungsverfahren nach einem der Ansprüche 11 bis 14, **dadurch gekennzeichnet, dass** das Molverhältnis (3,6-Dianhydrohexitol-Einheit (A) + alicyclische Diol-Einheit (B), die von den 1,4 : 3,6-Dianhydrohexitol-Einheiten (A) verschieden ist)/ (Terephthalsäure-Einheit (C)) 1,05 bis 1,5 beträgt.

16. Herstellungsverfahren nach einem der Ansprüche 11 bis 15, **dadurch gekennzeichnet, dass** der biaxial gestreckte Hohlkörper ein oder mehrere zusätzliche Polymere und/oder ein oder mehrere Additive umfasst.

## Claims

1. The use of a semicrystalline thermoplastic polyester for producing biaxially stretched hollow bodies, said polyester comprising:
• at least one 1,4:3,6-dianhydrohexitol unit (A);
• at least one alicyclic diol unit (B) other than the 1,4:3,6-dianhydrohexitol units (A);
• at least one terephthalic acid unit (C);
wherein the (A)/[(A)+(B)] molar ratio is at least 0.1 and at most 0.30;
said polyester not containing any aliphatic non-cyclic diol units, and the reduced solution viscosity (25°C; phenol (50%m): ortho-dichlorobenzene (50%m); 5 g/l of polyester) of said polyester being greater than 50 ml/g.

2. The use as claimed in claim 1, **characterized in that** the alicyclic diol (B) is a diol chosen from 1,4-cyclohexanedimethanol, 1,2-cyclohexanedimethanol, 1,3-cyclohexanedimethanol or a mixture of these diols, very preferentially 1,4-cyclohexanedimethanol.

3. The use as claimed in either of claims 1 and 2, **characterized in that** the 1,4:3,6-dianhydrohexitol (A) is isosorbide.

4. The use as claimed in one of claims 1 to 3, **characterized in that** the (3,6-dianhydrohexitol unit (A) + alicyclic diol unit (B) other than the 1,4:3,6-dianhydrohexitol units (A))/( terephthalic acid unit (C)) molar ratio is from 1.05 to 1.5.

5. The use as claimed in one of claims 1 to 4, **characterized in that** the biaxially stretched hollow body comprises one or more additional polymers and/or one or more additives.

6. Biaxially stretched hollow bodies comprising a semicrystalline thermoplastic polyester comprising:
• at least one 1,4:3,6-dianhydrohexitol unit (A);
• at least one alicyclic diol unit (B) other than the 1,4:3,6-dianhydrohexitol units (A);
• at least one terephthalic acid unit (C);
wherein the (A)/[(A)+(B)] molar ratio is at least 0.1 and at most 0.30;
said polyester not containing any aliphatic non-cyclic diol units, and the reduced solution viscosity (25°C; phenol (50%m): ortho-dichlorobenzene (50%m); 5 g/l of polyester) of said polyester being greater than 50 ml/g.

7. The biaxially stretched hollow bodies as claimed in claim 6, **characterized in that** the alicyclic diol (B) is a diol chosen from 1,4-cyclohexanedimethanol, 1,2-cyclohexanedimethanol, 1,3-cyclohexanedimethanol or a mixture of these diols, very preferentially 1,4-cyclohexanedimethanol.

8. The biaxially stretched hollow bodies as claimed in either of claims 6 and 7, **characterized in that** the 1,4:3,6-dianhydrohexitol (A) is isosorbide.

9. The biaxially stretched hollow bodies as claimed in one of claims 6 to 8, **characterized in that** the (3,6-dianhydrohexitol unit (A) + alicyclic diol unit (B) other than the 1,4:3,6-dianhydrohexitol units (A))/( terephthalic acid unit (C)) molar ratio is from 1.05 to 1.5.

10. The biaxially stretched hollow bodies as claimed in one of claims 7 to 9, **characterized in that** the biaxially stretched hollow body comprises one or more additional polymers and/or one or more additives.

11. A process for producing a biaxially stretched hollow body, comprising the following steps of:
• provision of a semicrystalline thermoplastic polyester comprising at least one 1,4:3,6-dianhydrohexitol unit (A), at least one alicyclic diol unit (B) other than the 1,4:3,6-dianhydrohexitol units (A), at least one terephthalic acid unit (C), wherein the (A)/[(A)+(B)] molar ratio is at least 0.1 and at most 0.30, said polyester not containing any aliphatic non-cyclic diol units, and the reduced solution viscosity (25°C; phenol (50%m): ortho-dichlorobenzene (50%m); 5 g/l of polyester) of said polyester being greater than 50 ml/g;
• preparation of said biaxially oriented hollow body from the semicrystalline thermoplastic polyester obtained in the preceding step.

12. The production process as claimed in claim 11, **characterized in that** the preparation is carried out by extrusion biaxial-stretch blow molding or by injection stretch blow molding.

13. The production process as claimed in claim 11 or 12, **characterized in that** the alicyclic diol (B) is a diol chosen from 1,4-cyclohexanedimethanol, 1,2-cyclohexanedimethanol, 1,3-cyclohexanedimethanol or a mixture of these diols, very preferentially 1,4-cyclohexanedimethanol.

14. The production process as claimed in any one of claims 11 to 13, **characterized in that** the 1,4:3,6-dianhydrohexitol (A) is isosorbide.

15. The production process as claimed in any one of claims 11 to 14, **characterized in that** the (3,6-dianhydrohexitol unit (A) + alicyclic diol unit (B) other than the 1,4:3,6-dianhydrohexitol units (A))/( terephthalic acid unit (C)) molar ratio is from 1.05 to 1.5.

16. The production process as claimed in any one of claims 11 to 15, **characterized in that** the biaxially stretched hollow body comprises one or more additional polymers and/or one or more additives.
